(19) Europäisches Patentamt
European Patent Office
Office européen des brevets

(11) **EP 2 410 204 B1**

(12) **FASCICULE DE BREVET EUROPEEN**

(45) Date de publication et mention
de la délivrance du brevet:
**16.01.2013 Bulletin 2013/03**

(51) Int Cl.:
***F16F 15/02*** *(2006.01)*

(21) Numéro de dépôt: **11171218.8**

(22) Date de dépôt: **23.06.2011**

(54) **PROCEDE DE REDUCTION DE LA CONSOMMATION DE CARBURANT D'UN MOTEUR.**

Verfahren für reducierung Kraftstoffverbrauch in einem Kraftfahrzeug.

Method to reduce fuel consumption in an engine.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.07.2010 FR 1055983**

(43) Date de publication de la demande:
**25.01.2012 Bulletin 2012/04**

(73) Titulaire: **Peugeot Citroën Automobiles SA
78140 Vélizy-Villacoublay (FR)**

(72) Inventeurs:
• **Dusi, Jacques
77220 GRETZ ARMAINVILLIERS (FR)**
• **Brun, Jérôme
75012 PARIS (FR)**

(56) Documents cités:
**EP-A1- 0 440 088     EP-A2- 2 025 970
US-A- 5 332 061     US-A1- 2005 187 692**

**Description**

L'invention porte sur le domaine de la consommation des véhicules équipés d'un moteur à combustion, et notamment de leur consommation lorsque le moteur fonctionne au ralenti.

Un moteur thermique employé sur un véhicule, par exemple un véhicule automobile, présente un régime de ralenti fixé, c'est-à-dire un régime prédéfini auquel le moteur fonctionne, en l'absence de charge. Le ralenti peut varier selon que le moteur fonctionne à chaud, à une température stabilisée de fonctionnement, ou suite à un démarrage à froid, et peut également varier en fonction de charges additionnelles entrainées par le moteur (compresseur de climatisation par exemple). Dans le reste du présent document, le ralenti est considéré à chaud, en l'absence de charge additionnelle sur le moteur.

Le ralenti est une phase de fonctionnement dans laquelle on tend à faire fonctionner le moteur au régime le plus faible possible, notamment pour en limiter la consommation de carburant et pour en limiter les émissions polluantes et de gaz à effet de serre. Cependant, au ralenti, le fonctionnement du moteur peut entrainer des désagréments vibro-acoustiques pour l'utilisateur du véhicule. Les bruits et vibrations au ralenti sont liés au déplacement du moteur sur ses points d'attache à la structure du véhicule. Sur certains véhicules, cela pousse bien souvent les constructeurs automobiles à augmenter le régime de ralenti pour limiter les vibrations au ralenti, au détriment de la consommation et du niveau d'émissions polluantes.

Il est par ailleurs connu d'employer dans un véhicule des systèmes antivibratoires actifs pour réduire les vibrations et améliorer le confort des utilisateurs du véhicule. Il est donc connu, partant d'un véhicule présentant un régime de ralenti classique, d'en améliorer le confort en le dotant d'un système antivibratoire actif. L'utilisation d'un tel système antivibratoire pour améliorer les prestations vibro-acoustiques d'un véhicule est par exemple connue au travers du document US 5 332 061, et peut par exemple donner lieu à des lois de commande optimisées comme dans le document FR 06 52167.

L'invention porte sur un procédé permettant d'optimiser la consommation de carburant d'un véhicule, et sur un véhicule équipé d'un moteur à combustion sur lequel le procédé a été mis en jeu.

Plus précisément, l'invention porte donc sur un procédé de réduction de la consommation de carburant d'un moteur thermique équipant un véhicule, caractérisé par :

- la détermination d'un régime de ralenti dit de confort, auquel une accélération prédéfinie est générée en un point donné du véhicule ;
- la détermination d'un régime de ralenti cible, inférieur au régime de ralenti de confort;
- l'adaptation d'au moins un paramètre physique d'un système actif de réduction des vibrations afin de lui permettre de rétablir l'accélération prédéfinie au point donné au régime de ralenti cible ;
- l'application au véhicule du régime de ralenti cible, en tant que régime de ralenti;
- la mise en oeuvre sur le véhicule du système actif de réduction des vibrations.

De préférence, le système actif de réduction des vibrations est adapté de sorte à présenter une fréquence de résonnance calculée selon les formules suivantes :

$$FRal = (NbCyl\,/2) * (RegRal\,/\,60) \;;$$

$$FreqRes = FRal - E \;;$$

dans lesquelles NbCyl est le nombre de cylindres du moteur, RegRal est régime de ralenti cible en tours par minutes, FreqRes est la fréquence de résonnance du système actif en hertz, FRal est la fréquence de travail du système actif au ralenti cible en hertz, et E est le décalage entre la fréquence de travail et la fréquence de résonance, E étant compris entre 1 et 3 hertz.

Selon la variante de l'invention considérée, l'accélération prédéfinie peut être mesurée en un point d'un plancher du véhicule, et est inférieure à $0{,}5 m/s^2$, et/ou peut être mesurée en un point du volant du véhicule et est inférieure à $1 m/s^2$.

Dans une variante de l'invention, le système actif de réduction des vibrations comportant une masse montée sur un ressort, l'adaptation des paramètres physiques du système actif de réduction des vibrations comporte la diminution de la raideur du ressort.

Dans une variante de l'invention, le système actif de réduction des vibrations comportant une masse montée sur un ressort, l'adaptation des paramètres physiques du système actif de réduction des vibrations comporte l'augmentation de la masse.

L'augmentation de la masse peut être comprise entre 200 et 300 grammes.

Dans une variante du procédé appliqué à un moteur à 4 cylindres, le régime cible est compris entre 600 et 750 tours par minute, et de préférence compris entre 650 et 700 tours par minutes.

Dans une variante du procédé appliqué à un moteur à 4 cylindres appliqué à un moteur à 2 ou 3 cylindres, le régime cible est compris entre 750 et 900 tours par minute, et de préférence entre 800 et 850 tours par minutes.

Dans une variante du procédé appliqué à un moteur à 6 cylindres, le régime cible est compris entre 550 et 700 tours par minutes, et de préférence entre 600 et 650 tours par minutes.

L'invention porte également sur un véhicule automobile équipé d'un moteur à 4 cylindres, dont le régime de ralenti est compris entre 600 et 750 tours par minute, et de préférence compris entre 650 et 700 tours par minutes, équipé d'un système actif de réduction des vibrations présentant une fréquence de résonnance comprise entre 18 et 23 hertz.

L'invention porte également sur un véhicule automobile équipé d'un moteur à 2 ou 3 cylindres, dont le régime de ralenti est compris entre 750 et 900 tours par minute, et de préférence compris entre 800 et 850 tours par minutes, équipé d'un système actif de réduction des vibrations présentant une fréquence de résonnance comprise entre 10,5 et 13 hertz.

L'invention porte également sur un véhicule automobile équipé d'un moteur à 6 cylindres, dont le régime de ralenti est compris entre 750 et 900 tours par minute, et de préférence compris entre 550 et 700 tours par minutes, caractérisé en ce qu'il est équipé d'un système actif de réduction des vibrations présentant une fréquence de résonnance comprise entre 25,5 et 33 hertz.

L'invention est décrite plus en détail ci-après et en référence aux figures représentant schématiquement divers aspects de l'invention.

La figure 1 présente l'influence de la vitesse de rotation du moteur au ralenti sur la consommation sur cycle normé d'un véhicule automobile classique.

La figure 2 présente l'influence de la vitesse de rotation du moteur au ralenti sur l'accélération liée aux vibrations en un point du véhicule, traduisant ainsi un niveau de confort.

La figure 3 présente la schématisation en termes de système mécanique d'un système actif de réduction des vibrations.

La figure 4 présente les fréquences de résonnance et de travail de systèmes antivibratoires actifs optimaux, sur une application donnée et pour deux régimes de ralenti.

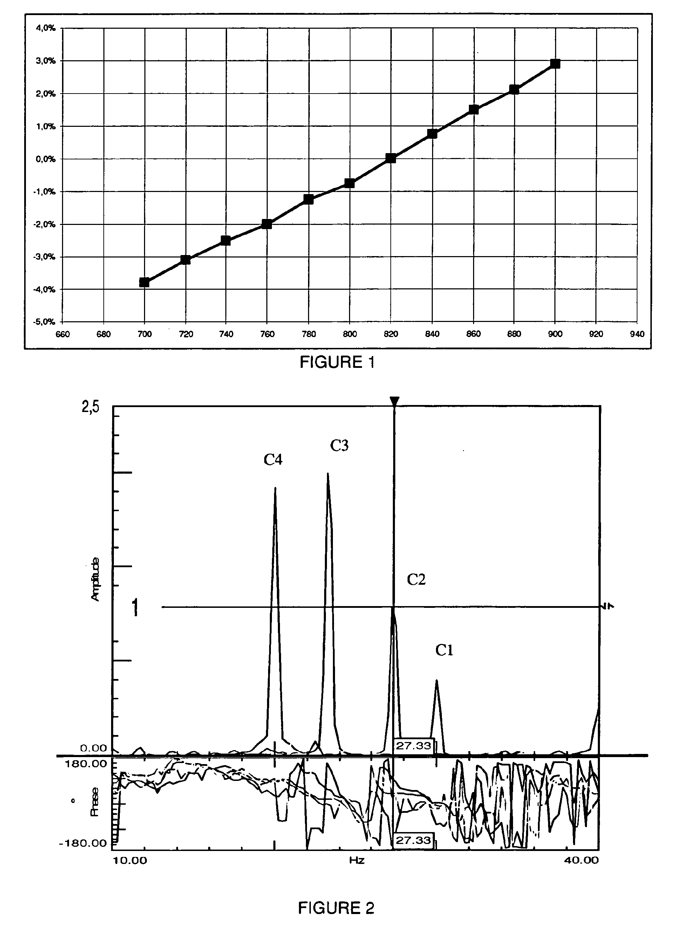

La figure 1 permet de constater l'importance du régime de ralenti sur la consommation sur cycle normalisé d'un véhicule automobile équipé d'un moteur de type Diesel à 4 cylindres de 2,2 litres de cylindrée. En abscisse est porté le régime de ralenti, en ordonné l'écart de consommation sur cycle normalisé, en pourcentage, par rapport à la consommation sur cycle normalisé avec un ralenti à 820 tours par minutes. Par rapport à un régime de ralenti typique de 820 tours par minutes, on constate qu'une baisse de régime permet une baisse de consommation sur cycle quasi linéaire, de l'ordre de 2% pour un passage à un régime de ralenti à 760 tours par minutes, et de près de 4% pour un passage à 700 tours par minutes.

Une telle réduction de la consommation, si elle peut apparaitre faible, peut cependant être très importante dans l'homologation d'un véhicule automobile. Par exemple, 3% de gains pour un véhicule devant être homologué autour de 160 grammes de dioxyde de carbone émis par kilomètres correspondent à un gain net de 5,5 grammes de CO2. Un tel gain est très important pour atteindre certains seuils réglementaires d'émissions.

Cependant, la baisse du régime de ralenti, dans la mesure permise pour assurer une bonne stabilité de fonctionnement du moteur, s'accompagne d'une dégradation du confort vibratoire et/ou acoustique du véhicule équipé. Cette dégradation est corrélée à l'augmentation du déplacement du moteur au niveau de ses points d'attache à la structure du véhicule.

Dans la même application de référence que précédemment citée, c'est-à-dire un véhicule automobile équipé d'un moteur de type Diesel à 4 cylindres de 2,2 litres de cylindrée, un passage à un régime de ralenti à 700 tours par minutes contre 820 provoque ainsi une augmentation de 43% du déplacement aux attaches du moteur.

Le tableau ci-dessous montre l'importance de cette augmentation du déplacement du moteur pour une large gamme de régime de ralenti, avec pour référence le déplacement aux attaches du moteur constaté pour un régime de 820 tours par minutes.

| Régime | 600 | 650 | 700 | 750 | 820 | 850 | 900 |
|---|---|---|---|---|---|---|---|
| Ecart par rapport à 820 t/min (en pourcentage) | 122 | 70 | 43 | 27 | 0 | -18 | -32 |

En pratique, il est possible d'objectiver la dégradation du confort vibro-acoustique résultant en mesurant l'accélération générée dans le véhicule en un point dit de confort, par exemple en un point du plancher du véhicule ou de son volant.

La figure 2 présente l'accélération mesurée en un point déterminé du véhicule pour différents régimes.

La courbe C1 correspond à l'accélération mesurée sur le volant pour un régime de ralenti de 900 tr/mn, la courbe C2 est celle mesurée sur ce même point à 820 tr/mn, la courbe C3 est celle mesurée sur ce même point à 700 tr/mn et la courbe C4 est celle mesurée sur ce même point à 600 tr/mn.

En abscisse, on a représenté la fréquence en hertz. En ordonnée, on a représenté l'accélération mesurée au point considéré en m/s$^2$.

Sur une motorisation à 4 cylindres, telle que celle ici considérée, l'harmonique générant l'accélération maximale (et donc la plus préjudiciable) est le 2$^e$ harmonique (dit « H2 »). A 820 tr/mn, la fréquence du H2 est de 27,3 Hz.

Il apparaît clairement que, globalement, plus le régime de ralenti est bas, plus l'accélération mesurée sur la 2$^e$ harmonique est grande et donc préjudiciable au confort ressenti par l'utilisateur du véhicule considéré.

La mise en oeuvre d'un procédé conforme à l'invention permet de rétablir une prestation de confort vibro-acoustique admissible malgré un abaissement du régime de ralenti permettant une baisse important de la consommation de carburant.

En couplant la baisse du régime de ralenti avec un système antivibratoire actif, on maintien dans l'invention un confort vibro-acoustique au niveau souhaité. Cela suppose une adaptation des paramètres physiques et de fonctionnement du système antivibratoire, afin de le faire fonctionner au nouveau régime de ralenti avec une efficacité maximale et une dépense énergétique minimale pour l'actionnement du système antivibratoire. En effet, les systèmes antivibratoires pilotés sont toujours envisagés pour améliorer le confort vibratoire à un régime de ralenti standard d'un véhicule. Les systèmes communément employés sont donc impropres à améliorer de manière optimale la consommation en carburant d'un véhicule.

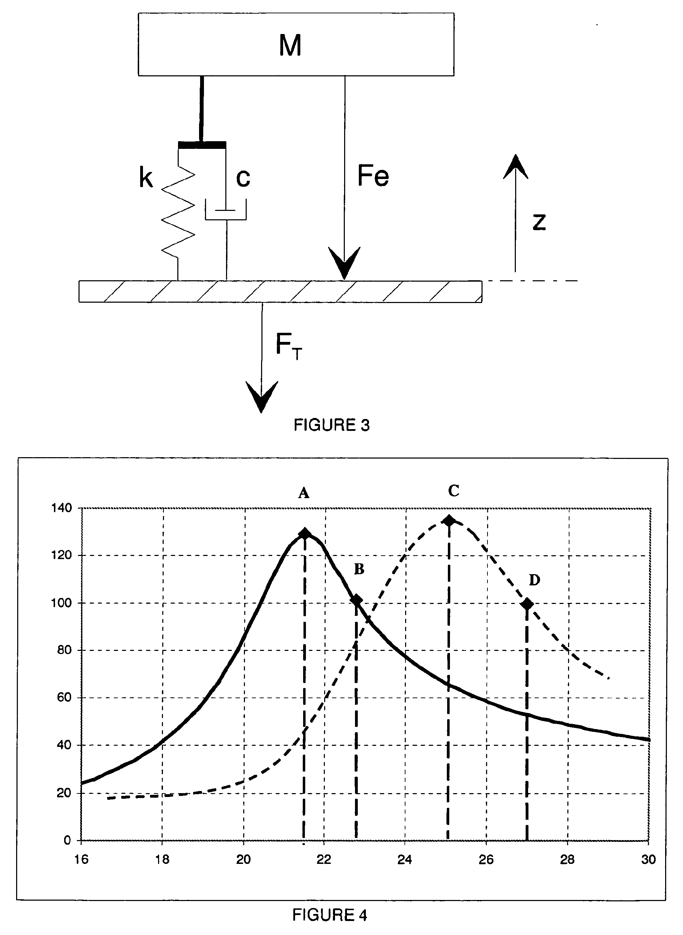

Afin de mieux comprendre les adaptations du système antivibratoire pour la mise en oeuvre de l'invention, la figure 3 présente la schématisation en termes de système mécanique d'un système actif de réduction des vibrations.

Un actionneur antivibratoire actif peut être vu comme une masse M placée sur une cale de raideur k et présente un amortissement c, et qui transmet une force électromagnétique $F_e$. Il en résulte un effort transmis à la caisse du véhicule $F_T$. La masse subit un déplacement z par rapport à la caisse.

Selon les équations mécaniques bien connues, on a : $F_T = F_e + c\dot{z} + kz$ Z 1 et : $\dfrac{Z}{F_e} = \dfrac{1}{mp^2 + cp + k}$

Il en ressort que : $F_T = \left(1 + \dfrac{cp + k}{mp^2 + cp + k}\right)F_e = \left(\dfrac{mp^2 + 2cp + 2k}{mp^2 + cp + k}\right)F_e$

L'effort transmis peut encore s'écrire : $F_t = M\ddot{z}$ ;

ce qui avec un déplacement z sinusoïdal peut s'écrire : $F^t = M\omega_0^2 z$ équation dans laquelle : $\omega_0 = \sqrt{\dfrac{k}{M}}$

L'actionneur correspondant au système masse ressort que nous venons de détailler, et dont la résonnance est employée pour optimiser son efficacité, il apparait donc que des adaptations des paramètres physiques de l'actionneur doivent être apportées pour s'adapter au régime de ralenti du moteur plus bas que le régime normal.

En effet, en figure 4 on a représenté, pour un même moteur du type Diesel à 4 cylindres de 2,2L de cylindrée, on a représenté les fréquences de résonnance et de travail de systèmes antivibratoires actifs optimaux, selon que le régime de ralenti est fixé à 820 tours par minutes (courbe en trait pointillé) ou à 700 tours par minutes (courbe en trait plein). La fréquence est portée en abscisse, l'effort nécessaire au maintien de la prestation vibro-acoustique est porté en ordonnée.

Il n'est pas possible de faire travailler le système antivibratoire exactement à la fréquence de résonnance Fres. Il est connu qu'a à cette fréquence, le système masse-ressort possède une rotation de phase de pente élevée. Toute variation de la commande, même infime, engendre alors un changement de phase important du signal de contre vibration. Le système antivibratoire actif fonctionnant en « opposition de phase » doit alors corriger de nouveau en sens inverse. Cette correction entraine elle-même de nouveau une grande variation de la phase et ainsi de suite et ceci de manière permanente. Un tel système est alors totalement instable. On impose donc un écart minimum entre la fréquence de résonnance Fres et la fréquence du H2 (harmonique 2 du régime vilebrequin) du régime de ralenti.

Pour un régime de ralenti standard à 820 tr/mn, le système est calé à une fréquence de résonnance maximale de 25 Hz (Point C) afin de travailler en opposition de phase à 27 Hz avec un effort minimal (point D).

En rappelant que $\omega_0 = \sqrt{\dfrac{k}{M}}$ avec k la raideur de la cale et M la masse mobile de l'actionneur, deux possibilités, combinables entre elles, apparaissent donc pour adapter l'actionneur à un régime de ralenti plus faible : diminuer la raideur k ou augmenter la masse M.

Si la raideur k est diminuée, l'effort $F_t = M\omega_0^2 z$ diminue avec le carré de la fréquence.

Il est alors possible de ré-augmenter l'effort (son maintien est une nécessité pour garantir la prestation de confort vibro acoustique recherchée) en augmentant la force électromagnétique Fe. Ceci impose cependant de modifier la bobine, les moules de fabrications de l'actionneur et engendre donc une élévation du coût du composant.

Par contre, si on augmente la masse M, l'effort peut être maintenu malgré la diminution de la fréquence de résonnance.

Une masse additionnelle (qui pourra être de l'ordre de 200 à 300 grammes pour l'application automobile précitée) est ajoutée de telle sorte que la fréquence de résonnance descende à 21,3 Hz (point A), pour un ralenti à 700 tr/mn au lieu de 820 tr/min, permettant une fréquence de travail de 23,3 Hz (point B) avec un effort minimal garantissant le maintien de la prestation de confort vibro-acoustique.

Une augmentation de la masse, qui ne nécessite pas d'adaptation de l'effort électromagnétique à générer (et donc pas d'adaptation de la bobine ou autres éléments de l'actionneur), est en outre une solution simple à mettre en oeuvre pour un coût relativement faible.

Que l'on adapte le système actif par augmentation de la masse, diminution de la raideur, ou une combinaison de ces paramètres, il apparait que selon la configuration du moteur et le régime de ralenti cible choisi, le système doit présenter une fréquence de résonance adaptée. Cette fréquence est déduite des relations suivantes :

$$\text{FRal} = (\text{NbCyl} / 2) * (\text{RegRal} / 60) \; ;$$

$$\text{FreqRes} = \text{FRal} - \text{E} \; ;$$

dans lesquelles NbCyl est le nombre de cylindres du moteur, RegRal est le régime de ralenti cible en tours par minutes, FreqRes est la fréquence de résonnance du système actif en hertz, FRal est la fréquence de travail du système actif au ralenti cible en hertz, et E est l'écart en Hz entre la fréquence de travail et la fréquence de résonance, E pouvant être compris par exemple entre 1 et 3 hertz.

Le tableau ci-dessous montre, selon la configuration du moteur et le ralenti choisi, des exemples d'optimisation de la fréquence de résonnance du système actif :

| Nombre de cylindres du moteur | 2 | 2 | 4 | 4 | 6 | 6 |
|---|---|---|---|---|---|---|
| Régime de ralenti (ReqRal) | 750 | 900 | 600 | 750 | 550 | 700 |
| Fréquence de travail au ralenti (Fral) | 12,5 | 15 | 20 | 25 | 27,5 | 35 |
| Ecart (E) entre la fréquence de travail et de résonance | 2 | 2 | 2 | 2 | 2 | 2 |
| Fréquence de résonance (Fres) | 10,5 | 13 | 18 | 23 | 25,5 | 33 |

Un système actif de réduction des vibrations consomme néanmoins de l'énergie (et a donc un impact négatif sur la consommation de carburant). Néanmoins, dans de nombreuses applications, le gain obtenu peut cependant être important. Par exemple, un gain de 4% de consommation sur cycle obtenu par le passage de l'application automobile précitée de 820tr/min à 700 tr/min est obtenu contre une augmentation de consommation de 0,5% seulement pour l'alimentation du système antivibratoire actif, soit un gain net de 3,5% de consommation sur cycle normalisé, sans dégradation du confort vibro-acoustique.

**Revendications**

1. Procédé de réduction de la consommation de carburant d'un moteur thermique équipant un véhicule, **caractérisé**

**par** :

- la détermination d'un régime de ralenti dit de confort, auquel une accélération prédéfinie est générée en un point donné du véhicule ;
- la détermination d'un régime de ralenti cible (RegRal), inférieur au régime de ralenti de confort ;
- l'adaptation d'au moins un paramètre physique (M, k) d'un système actif de réduction des vibrations afin de lui permettre de rétablir l'accélération prédéfinie au point donné au régime de ralenti cible (RegRal);
- l'application au véhicule du régime de ralenti cible (RegRal), en tant que régime de ralenti ;
- la mise en oeuvre sur le véhicule du système actif de réduction des vibrations.

2. Procédé selon la revendication 1, **caractérisé en ce que** le système actif de réduction des vibrations est adapté de sorte à présenter une fréquence de résonnance calculée selon les formules suivantes :

$$FRal = (NbCyl\ /2)\ *\ (RegRal\ /\ 60)\ ;$$

$$FreqRes = FRal - E\ ;$$

dans lesquelles NbCyl est le nombre de cylindres du moteur, RegRal est régime de ralenti cible en tours par minutes, FreqRes est la fréquence de résonnance du système actif en hertz, FRal est la fréquence de travail du système actif au ralenti cible en hertz, et E est le décalage entre la fréquence de travail et la fréquence de résonance, E étant compris entre 1 et 3 hertz.

3. Procédé selon la revendication 1 ou la revendication 2, **caractérisé en ce que** l'accélération prédéfinie est mesurée en un point d'un plancher du véhicule, et est inférieure à $0,5 m/s^2$, et/ou est mesurée en un point du volant du véhicule et est inférieure à $1 m/s^2$.

4. Procédé selon l'une quelconque des revendications 1 à 3, le système actif de réduction des vibrations comportant une masse (M) montée sur un ressort, **caractérisé en ce que** l'adaptation des paramètres physiques du système actif de réduction des vibrations comporte la diminution de la raideur (k) du ressort.

5. Procédé selon l'une des revendications 1 à 4, le système actif de réduction des vibrations comportant une masse (M) montée sur un ressort, **caractérisé en ce que** l'adaptation des paramètres physiques du système actif de réduction des vibrations comporte l'augmentation de la masse (M).

6. Procédé selon la revendication 5, **caractérisé par** une augmentation de la masse (M) comprise entre 200 et 300 grammes.

7. Procédé selon l'une quelconque des revendications précédentes appliqué à un moteur à 4 cylindres, **caractérisé en ce que** le régime cible est compris entre 600 et 750 tours par minute, et de préférence compris entre 650 et 700 tours par minutes.

8. Procédé selon l'une quelconque des revendications 1 à 6 appliqué à un moteur à 2 ou 3 cylindres, **caractérisé en ce que** le régime cible est compris entre 750 et 900 tours par minute, et de préférence entre 800 et 850 tours par minutes.

9. Procédé selon l'une quelconque des revendications 1 à 6 appliqué à un moteur à 6 cylindres, **caractérisé en ce que** le régime cible est compris entre 550 et 700 tours par minutes, et de préférence entre 600 et 650 tours par minutes.

**Claims**

1. A method to reduce fuel consumption of a heat engine equipping a vehicle, **characterized by**:

- determining a comfort idling speed at which a predefined acceleration is generated at a given point of the vehicle;

- determining a target idling speed (RegRal), lower than the comfort idling speed;
- adapting at least one physical parameter (M, k) of an active vibration reducing system so as to permit it to re-establish the predefined acceleration at the given point to the target idling speed (RegRal);
- applying to the vehicle the target idling speed (RegRal) as idling speed;
- implementing on the vehicle the active vibration reducing system.

2. The method according to Claim 1, **characterized in that** the active vibration reducing system is adapted so as to present a resonance frequency calculated according to the following formulae:

$$FRal = (NbCyl/2) * (RegRal / 60);$$

$$FreqRes = FRal - E;$$

in which NbCyl is the number of cylinders of the engine, RegRal is the target idling speed in revolutions per minute, FreqRes is the resonance frequency of the active system in hertz, FRal is the working frequency of the active system at the target idling in hertz, and E is the offset between the working frequency and the resonance frequency, E being comprised between 1 and 3 hertz.

3. The method according to Claim 1 or Claim 2, **characterized in that** the predefined acceleration is measured at a point of a floor of the vehicle, and is less than $0.5m/s^2$, and/or is measured at a point of the steering wheel of the vehicle and is less than $1m/s^2$.

4. The method according to any one of Claims 1 to 3, with the active vibration reducing system comprising a mass (M) mounted on a spring, **characterized in that** the adaptation of the physical parameters of the active vibration reducing system comprises the reduction of the rigidity (k) of the spring.

5. The method according to one of Claims 1 to 4, with the active vibration reducing system comprising a mass (M) mounted on a spring, **characterized in that** the adaptation of the physical parameters of the active vibration reducing system comprises the increase of the mass (M).

6. The method according to Claim 5, **characterized by** an increase of the mass (M) comprised between 200 and 300 grams.

7. The method according to any one of the preceding claims applied to a 4-cylinder engine, **characterized in that** the target speed is comprised between 600 and 750 revolutions per minute, and preferably comprised between 650 and 700 revolutions per minute.

8. The method according to any one of Claims 1 to 6 applied to a 2- or 3-cylinder engine, **characterized in that** the target speed is comprised between 750 and 900 revolutions per minute, and preferably between 800 and 850 revolutions per minute.

9. The method according to any one of Claims 1 to 6 applied to a 6-cylinder engine, **characterized in that** the target speed is comprised between 550 and 700 revolutions per minute, and preferably between 600 and 650 revolutions per minute.

**Patentansprüche**

1. Verfahren zur Verringerung des Kraftstoffverbrauchs eines Verbrennungsmotors, der ein Fahrzeug ausstattet, **gekennzeichnet durch**:

- die Bestimmung einer Leerlaufdrehzahl, Komfortleerlaufdrehzahl genannt, bei der eine vorbestimmte Beschleunigung an einer gegebenen Stelle des Fahrzeugs erzeugt wird,
- die Bestimmung einer Zielleerlaufdrehzahl (RegRal), die niedriger ist als die Komfortleerlaufdrehzahl,

- die Anpassung mindestens eines physikalischen Parameters (M, k) eines aktiven Systems zur Verringerung der Schwingungen, um es ihm zu erlauben, die vorbestimmte Beschleunigung an der gegebenen Stelle auf der Zielleerlaufdrehzahl (RegRal) wieder herzustellen,
- die Anwendung der Zielleerlaufdrehzahl (RegRal) an das Fahrzeug als Leerlaufdrehzahl,
- die Umsetzung des aktiven Systems zur Verringerung der Schwingungen auf dem Fahrzeug.

2. Verfahren nach Anspruch 1, **dadurch gekennzeichnet, dass** das aktive System zur Verringerung der Schwingungen derart angepasst ist, dass es eine Resonanzfrequenz aufweist, die gemäß den folgenden Formeln berechnet ist:

$$FRal = (NbCyl/2) * (RegRal / 60),$$

$$FreqRes = FRal - E,$$

wobei NbCyl die Anzahl der Zylinder des Motors ist, RegRal die Zielleerlaufdrehzahl in Umdrehungen pro Minute ist, FreqRes die Resonanzfrequenz des aktiven Systems in Hertz ist, FRal die Arbeitsfrequenz des aktiven Systems bei Zielleerlauf in Hertz ist und E der Versatz zwischen der Arbeitsfrequenz und der Resonanzfrequenz ist, wobei E zwischen 1 und 3 Hertz liegt.

3. Verfahren nach Anspruch 1 oder Anspruch 2, **dadurch gekennzeichnet, dass** die vorbestimmte Beschleunigung an einer Stelle eines Fußbodens des Fahrzeugs gemessen wird und niedriger ist als 0,5 m/s$^2$ und/oder an einer Stelle des Lenkrads des Fahrzeugs gemessen wird und niedriger ist als 1 m/s$^2$.

4. Verfahren nach einem der Ansprüche 1 bis 3, wobei das aktive System zur Verringerung der Schwingungen eine Masse (M) aufweist, die auf eine Feder montiert ist, **dadurch gekennzeichnet, dass** die Anpassung der physikalischen Parameter des aktiven Systems zur Verringerung der Schwingungen die Verringerung der Steifigkeit (k) der Feder aufweist.

5. Verfahren nach einem der Ansprüche 1 bis 4, wobei das aktive System zur Verringerung der Schwingungen eine Masse (M) aufweist, die auf eine Feder montiert ist, **dadurch gekennzeichnet, dass** die Anpassung der physikalischen Parameter des aktiven Systems zur Verringerung der Schwingungen die Erhöhung der Masse (M) umfasst.

6. Verfahren nach Anspruch 5, **gekennzeichnet durch** eine Erhöhung der Masse (M), die zwischen 200 und 300 Gramm liegt.

7. Verfahren nach einem der vorhergehenden Ansprüche, angewandt an einen 4-Takt-Motor, **dadurch gekennzeichnet, dass** die Zieldrehzahl zwischen 600 und 750 Umdrehungen pro Minute und vorzugsweise zwischen 650 und 700 Umdrehungen pro Minute liegt.

8. Verfahren nach einem der Ansprüche 1 bis 6, angewandt an einen 2- oder 3-Takt-Motor, **dadurch gekennzeichnet, dass** die Zieldrehzahl zwischen 750 und 900 Umdrehungen pro Minute und vorzugsweise zwischen 800 und 850 Umdrehungen pro Minute liegt.

9. Verfahren nach einem der Ansprüche 1 bis 6, angewandt an einen 6-Takt-Motor, **dadurch gekennzeichnet, dass** die Zieldrehzahl zwischen 550 und 700 Umdrehungen pro Minute und vorzugsweise zwischen 600 und 650 Umdrehungen pro Minute liegt.

FIGURE 1

FIGURE 2

FIGURE 3

FIGURE 4

**EP 2 410 204 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5332061 A
- FR 0652167